# EUROPÄISCHE PATENTANMELDUNG

(11) **EP 0 913 759 A2**
(43) Veröffentlichungstag der Anmeldung: **06.05.1999**
(21) Anmeldenummer: 98440219.8
(22) Anmeldetag: 09.10.1998
(51) Int. Cl.: G06F 1/00, H04L 29/06, G05B 19/418

(54) **Verfahren zum Austausch von Daten zwischen Applikationsprozessen in einem sicheren Rechnerverbund**

(30) Priorität: 20.10.1997 DE 19745994
(71) Anmelder: ALCATEL, 75008 Paris (FR)
(72) Erfinder: Arnold, Stefan, 71706 Markgröningen (DE); Reichl, Klaus, 1040 Wien (AT); König, Nikolaus, 2320 Schwechat (AT); Veider, Alfred Dr., 1120 Wien (AT)
(74) Vertreter: Rausch, Gabriele, Dr.

(57) **Zusammenfassung**

Aufgabe der Erfindung ist es, ein Verfahren anzugeben, wie Daten sicher zwischen Applikationsprozessen in einem Rechnerverbund ausgetauscht werden können. Der Rechnerverbund soll für die Applikationsprozesse räumlich transparent sein, d. h. die Applikationsprozesse selbst sollen keine Informationen über die Zuordnung von Applikationsprozessen zu einzelnen Rechnerknoten haben.

Daten, die von einem ersten Applikationsprozeß an einen zweiten Applikationsprozeß übermittelt werden sollen, werden erfindungsgemäß vom ersten Applikationsprozeß an eine Sicherheitsschicht weitergegeben (201), die die Kommunikationsberechtigung überprüft (202). Falls die Berechtigung vorliegt, ermittelt eine Weiterleitungsschicht, auf welchem Rechnerknoten der zweite Applikationsprozeß durchgeführt wird (203), und gibt die Daten über ein Datenkommunikationsnetz an diesen Rechnerknoten weiter (204). Vorzugsweise kommunizieren die Applikationsprozesse mit den darunterliegenden Schichten über eine definierte echtzeitfähige Programmierschnittstelle wie z. B. POSIX 1003.1b. Dadurch können die Applikationsprogramme unabhängig von speziellen Soft- und Hardwarekonfigurationen entwickelt werden. Die Erfindung ist insbesondere vorteilhaft anwendbar im Bereich der Schienenverkehrssteuerungstechnik.

## Beschreibung

Die Erfindung betrifft ein Verfahren zum Datenaustausch in einem sicheren Rechnerverbund nach dem Oberbegriff des Anspruchs 1 .

Ein derartiges Verfahren ist bekannt aus der EP-B1-0 246 218. Bei dem dort beschriebenen Verfahren kommunizieren mehrere Rechnerknoten, die vorzugsweise als redundante 2-aus-3-Rechnersysteme ausgeführt sind, über Punkt-zu-Punkt-Verbindungen miteinander. Jedem Knoten sind ein oder mehrere Applikationsprozesse zugeordnet, welches von jedem der Rechner des betreffenden Knotens abgearbeitet wird.

Applikationsprozesse sind Programme oder Teile von Programmen, die in sich abgeschlossene Einheiten darstellen. Insbesondere kann ein einzelner Applikationsprozeß über den gesamten ihm zugewiesenen Speicherbereich des jeweiligen Rechners eigenständig verfügen. Bei dem bekannten Datenaustauschverfahren ist die Zuordnung der Applikationsprozesse zu den einzelnen Rechnerknoten fest vorgegeben und innerhalb des Programmcodes der Applikationsprozesse verankert. Wenn beispielsweise ein Applikationsprozeß A mit einem Applikationsprozeß B kommunizieren möchte, so "weiß" der Applikationsprozeß A, von welchem Rechnerknoten der Applikationsprozeß B ausgeführt wird, und baut die entsprechende Punkt-zu-Punkt-Verbindung zwischen den beiden Rechnernknoten auf.

Durch diese feste Zuordnung von Applikationsprozessen zu Rechnerknoten ist sichergestellt, daß Applikationsprozesse nicht unerlaubt miteinander kommunizieren. Dieser Aspekt ist besonders für Anwendungen von Bedeutung, bei denen hohe Ansprüche an die Sicherheit gestellt werden. Beispiele hierfür sind etwa die Sicherung von Fahrwegen im Eisenbahnverkehr oder die Überwachung von Kernkraftwerken. Bei Veränderungen der Rechnerkonfiguration müssen jedoch bei einem nach dem eingangs erwähnten Verfahren arbeitenden Rechnerverbund die Applikationsprozesse geändert oder sogar neu erstellt werden. Dies macht die Anpassung eines derartigen Rechnerverbundes an kundenspezifische Anforderungen teuer und erschwert auch die Pflege während des Systemeinsatzes. Außerdem sind, insbesondere bei sicherheitsrelevanten Anwendungen, selbst nur unwesentlich geänderte Applikationsprozesse erneut einer umfangreichen Fehlerprüfung zu unterziehen. Gegebenenfalls muß auch eine Genehmigung durch zuständige Sicherheitsbehörden beantragt werden.

Es ist daher Aufgabe der Erfindung, ein Verfahren zum Austausch von Daten zwischen Applikationsprozessen in einem sicheren Rechnerverbund anzugeben. Die Topologie der Rechnerknoten soll für die Applikationsprozesse räumlich transparent sein. Räumliche Transparenz bedeutet in diesem Zusammenhang, daß die Applikationsprogramme selbst keine Informationen über die Zuordnung von Applikationsprozessen zu einzelnen Rechnerknoten haben. Es können dann Veränderung der Rechnerkonfiguration vorgenommen werden, ohne daß die Applikationsprogramme modifiziert oder neu erstellt werden müssen. Gleichzeitig soll das Verfahren sicher in dem Sinne sein, daß unter keinen Umständen Applikationsprozesse miteinander kommunizieren, die hierfür keine Berechtigung besitzen.

Die Erfindung löst diese Aufgabe mit Hilfe der in Anspruch 1 angegebenen Merkmale. Die erfindungsgemäß vorgesehene Sicherungsschicht erlaubt eine sichere und direkte Kommunikation zwischen den Applikationsprozessen. Dazu wird in der Sicherungsschicht geprüft, ob ein Applikationsprozeß, der mit einem anderen Applikationsprozeß kommunizieren möchte, hierzu berechtigt ist. Vorzugsweise greift gemäß Anspruch 3 die Sicherungsschicht bei dieser Überprüfung auf eine Konfigurationsliste zurück, in der festgelegt ist, welche Applikationsprozesse miteinander kommunizieren dürfen. Diese Konfigurationsliste muß nur in seltenen Fällen modifiziert werden, etwa dann, wenn ein zusätzlicher Applikationsprozeß vom Rechnerverbund ausgeführt werden und dieser mit den anderen Applikationsprozessen kommunizieren soll.

Nur wenn eine Berechtigung vorliegt, gibt die Sicherungsschicht die Daten an eine Weiterleitungsschicht weiter. Diese Weiterleitungsschicht stellt die Zuordnung zwischen Applikationsprozeß und ausführendem Rechnerknoten her. Auf der Grundlage dieser Zuordnung kann dann eine logische Verbindung zwischen den die Applikationsprozesse ausführenden Rechnerknoten aufgebaut werden. Wie in Anspruch 4 angegeben ist, verwendet die Weiterleitungsschicht bei dieser Zuordnung vorzugsweise eine im laufenden Betrieb des Rechnerverbundes nicht veränderbare Zuordnungstabelle, in der festgelegt ist, welche Applikationsprozesse von welchen Rechnerknoten ausgeführt werden. Die Zuordnungstabelle braucht nur bei einer Veränderung der Rechnerkonfiguration modifiziert zu werden.

Durch die Einführung einer normierten echtzeitfähigen Programmierschnittstelle nach Anspruch 2, etwa nach dem POSIX Standard IEEE 1003.1b, wird sichergestellt, daß die Applikationsprozesse portabel sind. Portabel heißt ein Applikationsprozeß, wenn die Ausführbarkeit weitgehend unabhängig ist von einem speziellen Betriebssystem oder anderer hardwarenaher Softwarekomponenten wie etwa Schnittstellentreibern.

Weitere vorteilhafte Ausgestaltungen der Erfindung sind den Unteransprüchen entnehmbar.

Die Erfindung wird nachfolgend anhand der Ausführungsbeispiele und der Zeichnungen eingehend erläutert. Es zeigen:
Fig. 1: Eine schematische Darstellung eines Rechnerverbundes, welcher für die Ausführung des erfindungsgemäßen Verfahrens geeignet ist,
Fig. 2: Darstellung des erfindungsgemäßen Verfahrens nach Anspruch 1 in Form eines Flußdiagramms,
Fig. 3: Vereinfachte Darstellung der sich bei Anwendung des erfindungsgemäßen Verfahrens ergebenden Rechner-Schichtstruktur,
Fig. 4: Vereinfachte Darstellung der sich bei Anwendung des erfindungsgemäßen Verfahrens nach Anspruch 2 ergebenden Rechner-Schichtstruktur.

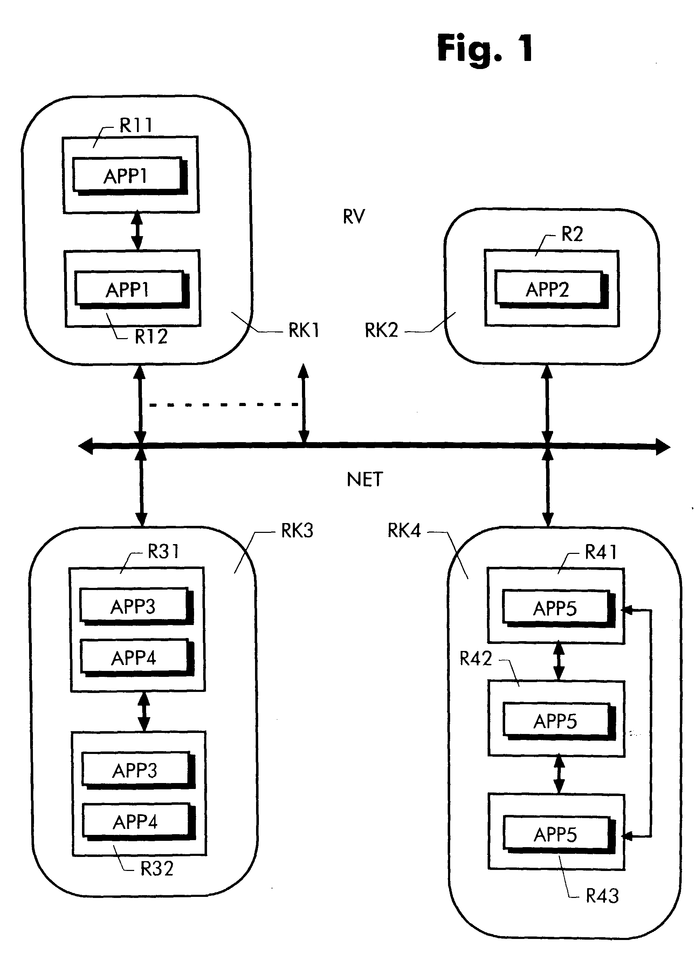

In Fig. 1 ist ein Rechnerverbund RV dargestellt, welcher mehrere Rechnerknoten RK1, RK2, RK3 und RK4 umfaßt. Als Rechnerknoten wird hier eine Gruppe von redundanten Rechnern bezeichnet, die alle die gleichen Applikationsprozesse ausführen und ihre Ergebnisse untereinander vergleichen. Beispiele hierfür sind 2-aus-2- oder 2-aus-3-Mehrrechnersysteme, wie sie in sicherheitskritischen Anwendungen eingesetzt werden. In Fig. 1 umfaßt der Rechnerknoten RK1 die Rechner R11 und R12, der Rechnerknoten RK3 die Rechner R31 und R32 und der Rechnerknoten RK4 die Rechner R41, R42 und R43. Ein Rechnerknoten kann im Spezialfall auch nur aus nur einem einzigen Rechner bestehen, wie dies in Fig. 1 für den Rechnerknoten RK2 mit dem Rechner R2 dargestellt ist. Unter einem Rechner wird eine Vorrichtung verstanden, die wenigstens eine zentrale Recheneinheit, einen Speicher und Ein/-Ausgabemittel umfaßt.

Der Rechnerverbund RV führt mehrere Applikationsprozesse APP1, APP2, ..., APP5 aus. In der Regel arbeitet jeder Rechnerknoten einen Applikationsprozeß ab. Wie für den Rechnerknoten RK3 dargestellt, kann ein Rechnerknoten auch mehrere Applikationsprozesse ausführen.

Zum Zwecke des Datenaustausches zwischen den Applikationsprozessen sind die Rechnerknoten RK1...RK4 über ein Datenkommunikationsnetz NET miteinander verbunden. Dieses Datenkommunikationsnetz kann beispielsweise als lokales Netzwerk (Local Area Network, LAN) ausgeführt sein und eine Bus-Topologie haben. Über das Datenkommunikationsnetz kann auch die Ein-und Ausgabe von anwendungsbezogenen Daten (z. B. Steuergrößen, Vorgaben des Anwenders, Graphikdaten für Bildschirmausgabe) erfolgen.

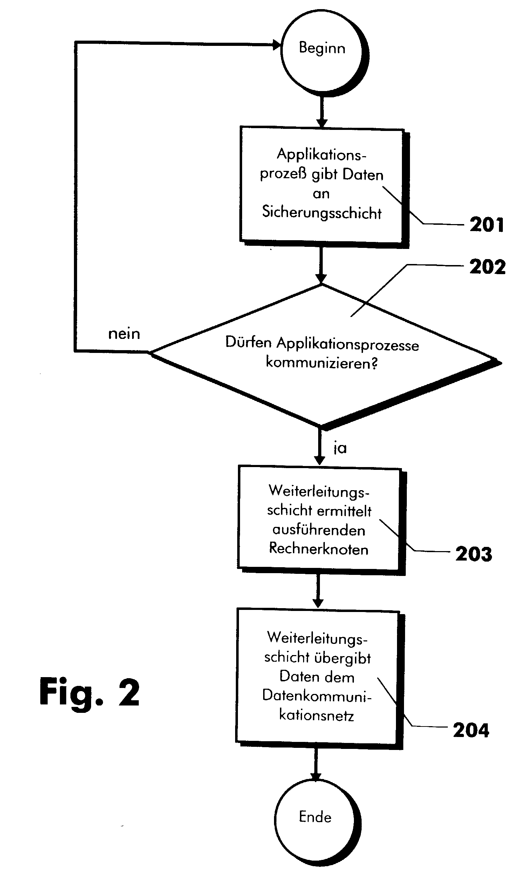

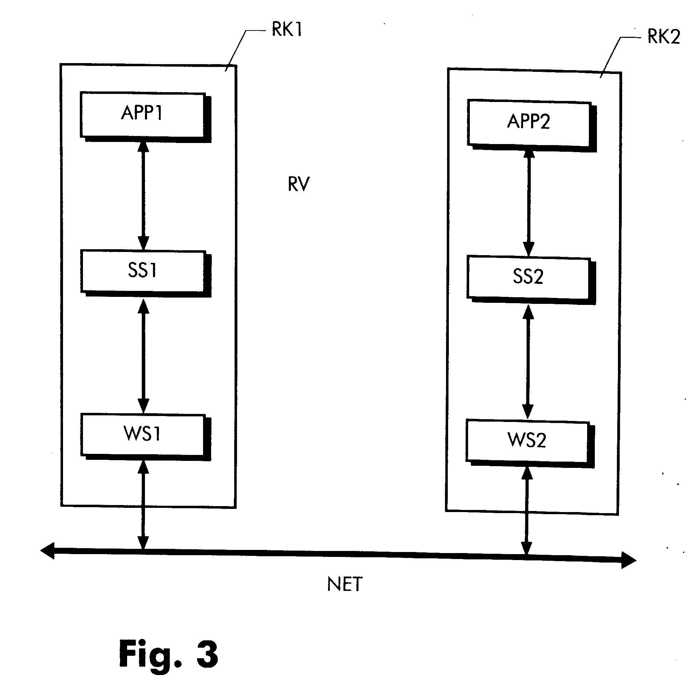

Das erfindungsgemäße Verfahren wird weiter anhand von Fig. 2 und Fig. 3 beschrieben. Wenn ein auf einem Rechnerknoten RK1 (die einzelnen Rechner des Rechnerknotens sind der Übersicht halber nicht dargestellt) ablaufender erster Applikationsprozeß APP1 Daten an einen zweiten, auf dem Rechnerknoten RK2 ablaufenden Applikationsprozeß APP2 übermitteln möchte, so reicht er die Daten erfindungsgemäß in einem ersten Schritt 201 an eine Sicherungsschicht SS1 weiter. Zusammen mit den Daten muß der erste Applikationsprozeß APP1 wenigstens angeben, welcher Applikationsprozeß der Adressat der Daten sein soll. Von welchem Rechnerknoten der als Adressat angegebene Applikationsprozeß ausgeführt wird, muß nicht angegeben sein.

Die Sicherungsschicht SS1 überprüft nun in einem zweiten Schritt 202, ob der erste Applikationsprozeß APP1 überhaupt mit dem zweiten Applikationsprozeß APP2 kommunizieren darf. Diese Überprüfung verhindert, daß Applikationsprozesse Daten austauschen, obwohl sie dafür keine Berechtigung besitzen. Durch Fehlleitung von Daten verursachte Fehler können somit weitgehend ausgeschlossen werden. Bei der Überprüfung, ob der erste Applikationsprozeß APP1 mit dem zweiten Applikationsprozeß APP2 kommunizieren darf, kann die Sicherheitsschicht auf Informationen zugreifen, die ihr während des Betriebs über das Datenkommunikationsnetz zugeleitet werden. Vorzugsweise jedoch greift die Sicherungsschicht SS1 bei dieser Überprüfung auf eine im laufenden Betrieb des Rechnerverbundes nicht veränderbare Konfigurationsliste zurück. In dieser Konfigurationsliste ist festgelegt, welche Applikationsprozesse miteinander kommunizieren dürfen. In der Konfigurationsliste sind zu diesem Zweck alle Applikationsprozesse aufgeführt, die überhaupt Daten austauschen dürfen. Im einzelnen ist dort genau festgelegt, welcher Applikationsprozeß mit welchen anderen Applikationsprozessen Daten austauschen darf. Der Datenaustausch kann u. U. auch nur unidirektional erlaubt sein, d. h. von einem ersten Applikationsprozeß zu einem zweiten, jedoch nicht vom zweiten zum ersten Applikationsprozeß. Da die Konfigurationsliste während des Betriebs des Rechnerverbundes nicht verändert werden kann, wird ein hohes Maß an Sicherheit und Zuverlässigkeit erzielt.

Falls die Sicherheitsschicht feststellt, daß die Applikationsprozesse nicht miteinander kommunizieren dürfen, so kann sie beispielsweise den ersten Applikationsprozeß APP1 und ein - in Fig. 3 nicht dargestelltes, Diagnosesystem darüber informieren, daß keine Kommunikation erlaubt ist, oder sie ignoriert den Kommunikationswunsch schlichtweg.

Falls hingegen die Sicherheitsschicht feststellt, daß die Applikationsprozesse zur Kommunikation berechtigt sind, so gibt sie die Daten in einem Schritt 203 an eine Weiterleitungsschicht WS1 weiter. Die Weiterleitungsschicht WS1 ermittelt, auf welchem Rechnerknoten der zweite Applikationsprozeß APP2 abläuft. Dieser Rechnerknoten kann, wie in Fig. 3 dargestellt, ein anderer Rechnerknoten RK2 sein. In diesem Falle übergibt die Weiterleitungsschicht WS1 die Daten in einem Schritt 204 dem Datenkommunikationsnetz NET. Ebenso ist es möglich, daß der erste Applikationsprozeß APP1 und der zweite Applikationsprozeß APP2 vom selben Rechnerknoten ausgeführt werden. In diesem Spezialfall brauchen keine Daten über das Datenkommunikationsnetz NET übertragen zu werden.

Mit Hilfe der Weiterleitungsschicht WS1 kann also der erste Applikationsprozeß APP1 Daten an den zweiten Applikationsprozeß APP2 adressieren, ohne darüber informiert zu sein, auf welchem Rechnerknoten dieser zweite Applikationsprozeß APP2 ausführt wird. Die Topologie des Rechnerverbundes erscheint für die darauf ausgeführten Applikationsprozesse daher lokal transparent. Zusammen mit der Sicherheitsschicht SS1 gewährleistet das erfindungsgemäße Verfahren somit lokale Transparenz bei einem hohen Maß an Systemsicherheit.

Bei der Ermittlung des den zweiten Applikationsprozeß APP2 ausführenden Rechnerknotens kann die Weiterleitungsschicht WS1 auf während des Betriebes zugeführte Daten zurückgreifen. Ähnlich wie im Falle der Sicherungsschicht SS1 ist es jedoch aus Gründen der Sicherheit im Regelfall vorzuziehen, daß die Weiterleitungsschicht WS1 die Ermittlung anhand einer im laufenden Betrieb des Rechnerverbundes nicht veränderbaren Zuordnungstabelle durchführt. In der Zuordnungstabelle ist genau aufgeschlüsselt, welche Applikationsprozesse von welchem Rechnerknoten ausgeführt werden. Vorzugsweise erfolgt die Angabe des Rechnerknotens in dieser Zuordnungstabelle durch die Spezifizierung eines bestimmten, den Knoten repräsentierenden Rechners. Daten werden in diesem Fall nicht etwa parallel an alle Rechner eines Knotens gesendet, sondern nur an den Rechner, der den Knoten repräsentiert. Dieser Rechner sorgt dann für die Verteilung der Daten auf die anderen Rechner innerhalb des Knotens. Die Applikationsprozesse und die Weiterleitungsschicht des sendenden Rechnerknotens benötigen folglich keine Informationen darüber, welchen Redundanzgrad der Ziel-Rechnenknoten hat, auf dem der zweite Applikationsprozeß APP2 ausgeführt wird. Somit ist das erfindungsgemäße Verfahren nicht nur in Hinblick auf die Topologie des Rechnerverbundes, sondern auch hinsichtlich der Knotenredundanz vollständig transparent. Auf diese Weise kann im Rechnerverbund etwa ein 2-aus-2-Rechnersystem durch ein 2-aus-3-Rechnersystem ersetzt werden, ohne daß bei der Software Änderungen vorgenommen werden müßten.

Ein weiterer Vorteil des erfindungsgemäßen Verfahrens liegt darin, daß aufgrund der verfügbaren Sicherheitsmechanismen auch extern zugeführte Daten sicher auf die Rechner im Verbund verteilt werden können. Ein Beispiel für derartige Daten wären etwa Projektierungsdaten für Gleisanlagen. Diese Daten müssen bei dem erfindungsgemäßen Verfahren nicht mehr, wie bislang üblich, über Festwertspeicher den einzelnen Rechnern zur Verfügung gestellt werden, sondern lassen sich "online" dem Rechnerverbund zuführen. Das Verfahren sorgt dann für die Weiterleitung an die entsprechenden Rechner, ohne daß es dabei zu sicherheitskritischen Zuständen kommen könnte.

In einem besonders vorteilhaften Ausführungsbeispiel nach Anspruch 2 kommunizieren die Applikationsprozesse mit den darunterliegenden Schichten über eine normierte echtzeitfähige Programmierschnittstelle. Derartige Programmierschnittstellen stellen darauf aufbauenden Applikationsprozessen einen normierten Satz von über definierte Befehle aufrufbare Funktionen zur Verfügung. Wenn Applikationsprozesse über Programmierschnittstellen mit darunterliegenden Schichten kommunizieren, so können die Applikationsprozesse ohne Umcodierung bei einem Wechsel der darunterliegenden Komponenten, etwa der Hardware, des Betriebssytems oder der Schnittstellentreiber, weiter verwendet werden. Eine Programmierschnittstelle heißt normiert, wenn der Befehlssatz einheitlich festgelegt und somit unveränderlich ist. Als echtzeitfähig bezeichnet man eine Programmierschnittstelle, wenn sie bestimmte Antwortzeiten garantiert. Dies bedeutet, daß ein Applikationsprozeß nach einer bestimmten Anfrage das Ergebnis dazu innerhalb einer fest vorgebbaren Zeit ermittelt.

Ein Beispiel für eine derartige normierte echtzeitfähige Programmierschnittstelle ist ausführlich beschrieben in B. O. Gallmeiser, "POSIX.4: Programming for the Real World", O'Reilly & Associates, Inc., 1995. Definiert ist diese Schnittstelle in IEEE Standard 1003.1b, Institute of Electrical and Elctronics Engineers, Inc. Bei Verwendung einer Programmierschnittstelle nach diesem Standard rufen sich die Applikationsprozesse über Botschaften auf, die in Warteschlangen abgelegt und sequentiell abgearbeitet werden ("Message-Queues").

Bei Verwendung einer derartigen Programmierschnittstelle erlaubt das erfindungsgemäße Verfahren die Erstellung von Applikationsprozessen für Sicherheitsanwendungen, ohne das dabei eine existierende Hardware- und Softwarekonfiguration speziell berücksichtigt werden müßte. Damit können die Applikationsprozesse über sehr lange Zeit unverändert betrieben werden, und zwar auch dann, wenn etwa zur Erhöhung der Rechenleistung vorhandene Hard- und Software gegen eine modernere ausgetauscht wird. Es ist im übrigen auch möglich, auch die Sicherheitsschicht mit der darunterliegenden Schicht über eine definierte Programmierschnittstelle kommunizieren zu lassen.

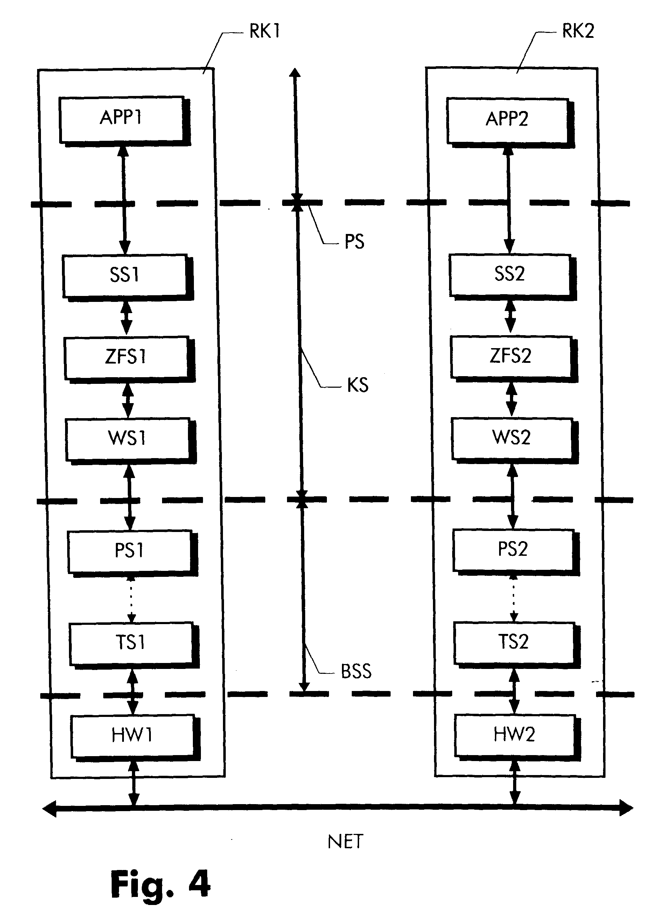

Fig. 4 zeigt ein Ausführungsbeispiel nach Anspruch 2 in schematischer Darstellung. Der Applikationsprozeß APP1 kommuniziert mit der Sicherungsschicht SS1 über die Programmierschnittstelle PS. Zusätzlich zu den in Fig. 3 gezeigten Schichten sind hier weitere Schichten vorgesehen. In diesem Ausführungsbeispiel gibt die Sicherungsschicht SS1 die Daten nicht direkt an die Weiterleitungsschicht, sondern an eine Zusatzfunktionen bietende Schicht ZFS1 weiter. In dieser Schicht kann beispielsweise eine Synchronisation von Datenströmen vorgenommen werden. Ferner kann in dieser Schicht ein Mehrheitsentscheid durchgeführt werden, wie er etwa für sichere 2-aus-3-Rechnersysteme vorgesehen ist. Hierfür sei auf die eingangs bereits erwähnte Patentschrift EP-B1-0 246 218 verwiesen. Die Sicherungsschicht SS1, die Zusatzfunktionen bietende Schicht ZFS1 und die Weiterleitungsschicht WS1 stellen in diesem Ausführungsbeispiel Funktionen her, die für die Kommunikation zwischen den Applikationsprozesse wesentlich sind, und werden daher als Kommunikationsschichten KS bezeichnet.

Die Kommunikationsschichten KS setzen auf den Betriebssystemschichten BSS auf. Die Betriebssystemschichten BSS umfassen u. a. die Protokollschicht PS1 und die Treiberschicht TS1, welche die Anbindung an die Hardwareschicht HS1 herstellt. Die Protokollschicht PS1 erzeugt Protokolle für die Datenübermittlung über das Datenkommunikationsnetz.

Der in Fig. 4 stellvertretend für alle anderen Rechnerknoten im Rechnerverbund dargestellte Rechnerknoten RK2 ist analog zum Rechner R1 aufgebaut. Ein Applikationsprozeß APP2 kommuniziert mit einer Sicherungsschicht SS2, die über die Zusatzfunktionen bietende Schicht ZFS2 Daten mit der Weiterleitungsschicht WS2 austauscht. Über die Protokollschicht PS2, die Treiberschicht TS2 und die Hardwareschicht HS2 gelangen die Daten zum Datenkommunikationsnetz NET.

Wenn der Applikationsprozeß APP1 Daten an den Applikationsprozeß APP2 übermitteln möchte, so gelangen diese im Rechnerknoten RK2 in umgekehrter Reihenfolge zum Applikationsprozeß APP2. Die Weiterleitungsschicht übernimmt hier die Aufgabe, die Daten auf die einzelnen Rechner im Rechnerknoten zu verteilen. Die Weiterleitungsschicht benötigt zu diesem Zweck Informationen zur Topologie des eigenen Rechnerknotens RK2. Je nach Sicherheilsonforderungen kann durch die Sicherungsschicht SS2 eine erneute Überprüfung stattfinden, ob eine Kommunikation zwischen den beiden Applikationsprozessen APP1 und APP2 erlaubt ist. Die Funktion der weiteren Schichten, insbesondere der die Zusatzfunktionen bietenden Schicht FZS2, hängt vom jeweiligen Anwendungsfall ab.

## Patentansprüche

1. Verfahren zum Austausch von Daten zwischen Applikationsprozessen (APP1...APP5 in Fig. 1),
a) die von Rechnerknoten (RK1... RK4) ausgeführt werden,
i) die mehrere redundante Rechner (R11, R12; R2; R31, R32; R41, R42, R43) umfassen
ii) und die über ein Datenkommunikationsnetz (NET) zu einem Rechnerverbund (RV) zusammengefaßt sind,
gekennzeichnet durch folgende Schritte:
b) Daten, die von einem ersten Applikationsprozeß (APP1) an einen zweiten Applikationsprozeß (APP2) übermittelt werden sollen, werden vom ersten Applikationsprozeß an eine Sicherheitsschicht (SS1) weitergegeben (201 in Fig. 2),
c) die Sicherheitsschicht überprüft (202), ob der erste Applikationsprozeß mit dem zweiten Applikationsprozeß kommunizieren darf,
d) wenn der der erste Applikationsprozeß mit dem als Empfänger angegebenen Applikationsprozeß kommunizieren darf, gibt die Sicherungs; schicht die Daten an eine Weiterleitungsschicht (WS1) weiter,
e) die Weiterleitungsschicht ermittelt (203), auf welchem Rechnerknoten der zweite Applikationsprozeß durchgeführt wird,
f) die Weiterleitungsschicht gibt die Daten über das Datenkommunikationsnetz an diesen Rechnerknoten weiter (204).

2. Verfahren nach Anspruch 1, bei dem die Applikationsprozesse (APP1, APP2 in Fig. 4) mit der Sicherheitsschicht (SS1, SS2) und den darunter liegenden Schichten über eine normierte echtzeitfähige Programmierschnittstelle (PS) kommunizieren.

3. Verfahren nach einem der vorhergehenden Ansprüche, bei dem die Sicherheitsschicht bei der Überprüfung, ob der sendende Applikationsprozeß mit dem als Empfänger angegebenen Applikationsprozeß kommunizieren darf, eine im laufenden Betrieb des Rechnerverbundes nicht veränderbare Konfigurationsliste verwendet, in der festgelegt ist, welche Applikationsprozesse miteinander kommunizieren dürfen.

4. Verfahren nach einem der vorhergehenden Ansprüche, bei dem die Weiterleitungsschicht zur Ermittlung, auf welchem Rechnerknoten der Applikationsprozeß durchgeführt wird, welcher als Empfänger angegeben ist, eine im laufenden Betrieb des Rechnerverbundes nicht veränderbare Zuordnungstabelle verwendet, in der festgelegt ist, welche Applikationsprozesse von welchen Rechnerknoten ausgeführt werden.

5. Verfahren nach einem der vorhergehenden Ansprüche, bei dem die Sicherheitsschicht auch beim Empfang von Daten überprüft, ob der sendende Applikationsprozeß mit dem als Empfänger angegebenen Applikationsprozeß kommunizieren darf, und bei dem die Sicherheitsschicht die Daten nur dann an den als Empfänger angegebenen Applikationsprozeß weitergibt, wenn diese Bedingung erfüllt ist.
